# EUROPEAN PATENT SPECIFICATION

(11) **EP 4 265 376 B1**
(45) Date of publication and mention of the grant of the patent: **18.03.2026**
(21) Application number: 22192066.3
(22) Date of filing: 25.08.2022
(51) Int. Cl.: B25J 9/10, B25J 9/12, B25J 11/00, B25J 17/02

(54) **DRIVING MECHANISM AND ROBOT**
ANTRIEBSMECHANISMUS UND ROBOTER
MÉCANISME D'ENTRAÎNEMENT ET ROBOT

(30) Priority: 19.04.2022 CN 202210409929
(43) Date of publication of application: 25.10.2023
(73) Proprietor: Beijing Xiaomi Mobile Software Co., Ltd., Beijing 100085 (CN)
(72) Inventor: ZHANG, Baowei, Beijing, 100085 (CN); ZHU, Xiwang, Beijing, 100085 (CN); LUO, Gang, Beijing, 100085 (CN); LIU, Zhaofeng, Beijing, 100085 (CN); WANG, Xin, Beijing, 100085 (CN)
(74) Representative: dompatent

(56) References cited:
- WO-A1-2012/070547
- CN-A- 104 228 993
- CN-A- 108 118 455
- CN-A- 108 748 125
- JP-A- 2001 246 585
- JP-A- H03 236 966
- KR-A- 20120 127 896
- US-A- 4 073 088
- US-B1- 6 238 262

## Description

### TECHNICAL FIELD

The present disclosure relates to a field of robots, and more particularly to a driving mechanism and a robot.

### BACKGROUND

With advances in robotics, the use of robots is increasing both in industrial production, but also in daily life as consumer products.

A body of the robot is usually connected with some movable parts, such as a tail of a robot cat, a robot dog, a robot fish or the like, and ears of a robot cat or a robot dog. In some simple robots, the movable members such as the tail and ears are generally only hung on the body as decorations, which cannot move by themselves, and may only be moved by users.

US6238262B1 relates to an electronic interactive puppet, which has a body with a head that is capable of moving from left to right. The puppet's head also has a moveable mouth, moveable eyes and moveable eyebrows to give added expression to the puppet's facial features. An actuating means is provided for moving the puppet's head, mouth, eyes and eyebrows responsive to an actuating signal. The puppet also includes a sound reproducing means housed within the body for reproducing pre-recorded sounds such as dialogue for the puppet. An electronic control means is operatively connected to the actuating means and sound reproducing means of the puppet. The sound reproducing means and actuating means can be activated in synchronism with a sound track of a video program so that the puppet appears to interact audibly and animatedly with the video program. The puppet can be used with any conventional video program, and does not require a special video recording.

CN108748125A provides an s-shaped industrial robot. The s-shaped industrial robot comprises a base body and a mechanical hand body installed on the base, wherein the mechanical hand body comprises aplurality of moving joints connected together, every two adjacent moving joints are hinged to each other and driven by joint assemblies arranged in the moving joints; and the base body is internally provided with a control unit, each joint assembly is in control connection with the control unit through a circuit. The s-shaped industrial robot does bent motion by imitating the strip-shaped structure of a snake and can move even in a narrow bent space.

JP2001246585A relates to a robot which is provided with a power storage mechanism constituted by, for example, a power spring and a flywheel in addition to an ordinary drive mechanism such as an actuator performing walking movement. A high movement speed and a large torque can be generated without using the large- scale actuator by storing power in advance by driving a motor and releasing the stored power instantaneously. Device cost can be reduced. Moreover, a battery having large power consumption and a large capacity is not required.

JP403236966A relates to an assembled cylindrical cam formed by the combination of head cams respectively having two facing cam groove side faces, which is used in a shuttle printer. Both plastic head cams are manufactured from upper and lower cutting dies arranged in the direction of the arrow so that a grooving work can be superseded accordingly. The press-fit protrusion 1 of the head cam is fitted into the press-fit recess of the head cam and pressed thereinto until the hitting part of the head cam and that of the head cam come into contact with each other, to stabilize the groove width of the cylindrical cam to a constant value. Then, a metal cam shaft 8 is pressed into the head cams. US4073088A discloses another robotic mechanism with a cam.

### SUMMARY

Embodiments of the present disclosure provide a driving mechanism and a robot, which are capable of saving space and reducing the production cost. The technical solution is shown as follows.

The present invention is defined in independent claim 1, and the preferable features according to the present invention are defined in the dependent claims. Any embodiment in the present disclosure that does not fall within the scope of the present invention should be regarded as an example for understanding the present invention.

Embodiments of a first aspect of the present disclosure provide a driving mechanism for a robot. The driving mechanism includes a driving member, a transmission member, and a swinging member. The driving member has an output end. The transmission member is connected to the output end of the driving member. The transmission member has a driving slot, and the driving slot extends along a circumferential direction of the transmission member. The swinging member is configured to be movably connected to a body of the robot. A part of the swinging member is movably connected in the driving slot, and configured to move along the driving slot under drive of the transmission member to drive the swinging member to swing.

The swinging member includes a swinging portion and a linkage portion. The swinging portion is configured to be connected to the body. The linkage portion has a first end and a second end opposite to each other. The first end of the linkage portion is connected to the swinging portion, and the second end of the linkage portion is in the driving slot.

The swinging portion includes a first part, a second part and a third part. The first part has a first end and a second end opposite to each other. The first end of the first part is configured to be movably connected to the body. The second part has a first end and a second end opposite to each other. The first end of the second part is connected to the second end of the first part, and the second part is connected to the linkage portion. The third part is connected to the second end of the second part.

A center line of the first part and a center line of the second part are coplanar and a first preset included angle is defined between the center line of the first part and the center line of the second part; and/or a center line of the third part and a center line of the second part are coplanar and a second preset included angle is defined between the center line of the third part and the center line of the second part.

The first end of the first part includes a hinge section.

The linkage portion includes a connecting part and a sliding part. The connecting part has a first end and a second end opposite to each other. The first end of the connecting part is connected to the swinging portion. The sliding part is connected to the second end of the connecting part and in the driving slot.

The transmission member is a cam, and the driving slot is in and around an outer peripheral wall of the cam.

The driving slot includes a first segment, and the first segment has a sinusoidal shape on a development surface of the outer peripheral wall.

The transmission member includes a first transmission portion and a second transmission portion opposite to each other, and the first transmission portion is connected to the second transmission portion to define the driving slot.

The first transmission portion has a first guide groove, and the second transmission portion has a second guide groove. The first guide groove and the second guide groove define the driving slot.

The driving slot includes a first segment and a second segment. A third preset included angle being defined between an extension direction of at least a part of the first segment and a rotation axis of the transmission member on a development surface of the outer peripheral wall; and/or, a fourth preset included angle being defined between an extension direction of the second segment and a rotation axis of the transmission member on a development surface of the outer peripheral wall.

On a plane perpendicular to a rotation axis of the transmission member, an outer contour of the transmission member includes a first side edge, a second side edge and a third side edge, and each of the first side edge, the second side edge and the third side edge includes a respective first end and a respective second end; the first end of the second side edge is transitionally connected to the first end of the first side edge, the second end of the second side edge is transitionally connected to the first end of the third side edge, and the second end of the third side edge is connected to the second end the first side edge; the first side edge is a circular arc edge, and a circle center of the first side edge is on the rotation axis of the transmission member.

Embodiments of a second aspect of the present disclosure provide a robot. The robot includes a body and a driving mechanism according to the embodiments of the first aspect of the present disclosure. The driving member of the driving mechanism is connected to the body, and the swinging member is movably connected to the body.

A hinged support is connected to an outer wall of the body, and the swinging member is connected to the hinged support.

The technical solution provided by the embodiments of the present disclosure may include the following technical effects.

In the embodiments of the present disclosure, the transmission member has the driving slot extending along the circumferential direction of the transmission member, and the part of the swinging member is movably connected in the driving slot. When the transmission member is driven by the driving member to move, the part of the swinging member movably connected in the driving slot moves along the driving slot to drive the swinging member to swing, as the swinging member is fitted with the driving slot. The driving mechanism has a simple structure and a small volume, thus saving space and reducing a cost, which is beneficial to reducing a production cost.

### BRIEF DESCRIPTION OF THE DRAWINGS

FIG. 1 is a schematic view illustrating a robot according to an embodiment of the present disclosure.
FIG. 2 is a schematic view illustrating a driving mechanism according to an embodiment of the present disclosure.
FIG. 3 is an enlarged schematic view of the driving mechanism in FIG. 2.
FIG. 4 is a schematic view illustrating a swinging member according to an embodiment of the present disclosure.
FIG. 5 is a development schematic view of an outer peripheral wall of a cam according to an embodiment of the present disclosure.
FIG. 6 is a schematic view illustrating a cam according to an embodiment of the present disclosure.
FIG. 7 is a schematic view illustrating a cam according to another embodiment of the present disclosure.
FIG. 8 is a schematic view illustrating a first transmission portion and a second transmission portion connected with each other according to an embodiment of the present disclosure.
FIG. 9 is a partial schematic view of a robot according to an embodiment of the present disclosure.

### DETAILED DESCRIPTION

In order to make the objects, technical solutions and advantages of the present disclosure more clear, embodiments of the present disclosure will be further described below in combination with accompanying drawings.

Unless defined otherwise, technical terms or scientific terms herein should have the ordinary meaning as understood by one of ordinary skill in the art to which the present disclosure belongs. The terms such as "first", "second" and "third" and the like used in the specification and the claims of the present disclosure are not intended to indicate any order, quantity or importance, but are only used to distinguish different components. Likewise, terms such as "a" or "an" do not denote a quantitative limitation, but rather denote the presence of at least one. Terms like "comprising" or "containing" mean that the elements or components appearing before "comprising" or "containing" encompass the elements or components and their equivalents listed after "comprising" or "containing", but do not exclude the presence of other elements or components. Terms like "connected" or "coupled" are not limited to physical or mechanical connections, but may include electrical connections, regardless of whether they are direct or indirect. Terms "up", "down", "left", "right", etc. are only used to indicate a relative positional relationship, and when an absolute position of the described object changes, the relative positional relationship may also change accordingly.

In order to enable a movable part of a robot to move by itself, one or two actuators may be arranged on a body of the robot, and the two actuators may control the movable part to move in two directions respectively. However, the structure of this type occupies a lot of space and has a high cost.

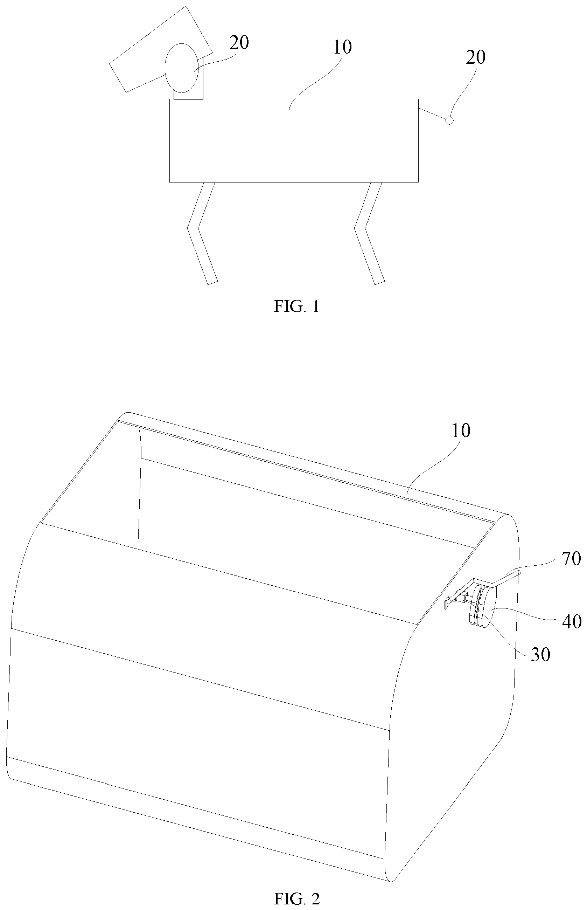

FIG. 1 is a schematic view illustrating a robot according to an embodiment of the present disclosure. The robot may be, but is not limited to, an automated machine such as a robot dog, a robot cat, and a robot fish. It should be noted that the present disclosure does not limit types of the robots.

As shown in FIG. 1, the robot includes a body 10 and a movable part 20. The movable part 20 may include a tail, ears, wings or the like. For example, in some embodiments of the present disclosure, the robot dog is taken as an example, and the movable part 20 is a tail of the robot dog. The movable part 20 is connected to the body 10 through a driving mechanism to move under the driving of the driving mechanism, or a part of the driving mechanism may also be configured as the movable part. It should be noted that the driving mechanism may be used for the movable part with a swinging function on the robot. In addition to the example described above, the driving mechanism may also be applied to other movable parts. The above description is only an example and not a limitation.

FIG. 2 is a schematic view illustrating a driving mechanism according to an embodiment of the present disclosure. As shown in FIG. 2, in order to facilitate the description of the relationship between the driving mechanism and the body 10, the body 10 is also shown. As shown in FIG. 2, the driving mechanism includes a driving member 30, a transmission member 40 and a swinging member 70.

The transmission member 40 is connected to an output end of the driving member 30. The transmission member 40 has a driving slot 40b, and the driving slot 40b extends along a circumferential direction of the transmission member 40.

The swinging member 70 is movably connected to the body 10 of the robot. A part of the swinging member 70 is movably connected in the driving slot 40b, and configured to move along the driving slot 40b under drive of the transmission member 40 to drive the swinging member 70 to swing. That is, the driving member 30 is configured to drive the transmission member 40 to move, and the part of the swinging member 70 movably connected in the driving slot 40b moves when the transmission member 40 moves, so as to enable the swinging member 70 to swing as a whole.

In the embodiments of the present disclosure, the transmission member 40 has the driving slot 40b, and the part of the swinging member 70 is movably connected in the driving slot 40b, such that when the driving member 30 drives the transmission member 40 to move, the part of the swinging member 70 movably connected in the driving slot 40b may move along the driving slot 40b to drive the swinging member 70 to swing, as the swinging member 70 is fitted with the driving slot 40b. Since the movable part 20 is connected to the swinging member 70 or a part of the swinging member 70 is directly configured as the movable part 20, the movable part 20 of the robot can be driven to move. The driving mechanism has a simple structure and a small volume, thus saving space and reducing a cost, which is beneficial to reducing a production cost of the robot.

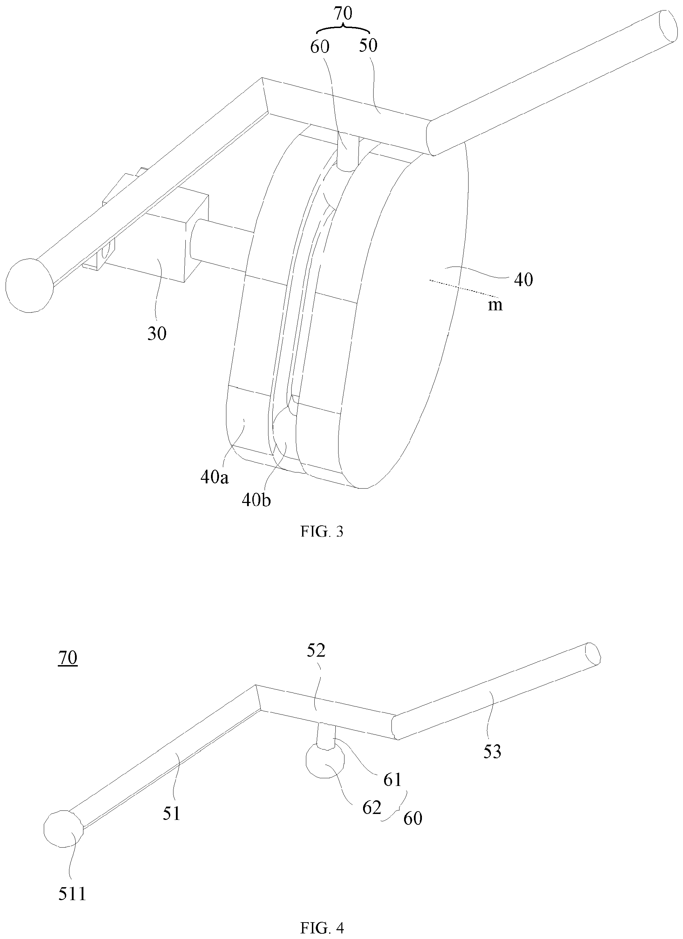

FIG. 3 is an enlarged schematic view of the driving mechanism in FIG. 2. As shown in FIG. 3, the swinging member 70 includes a swinging portion 50 and a linkage portion 60.

The swinging portion 50 is connected to the body 10. The linkage portion 60 has a first end and a second end opposite to each other, the first end of the linkage portion 60 is connected to the swinging portion 50, and the second end of the linkage portion 60 is in the driving slot 40b.

The swinging portion 50 is movably connected to the body 10 of the robot. During the movement of the transmission member 40, the transmission member 40 drives the linkage portion 60 through the driving slot 40b, such that the linkage portion 60 moves along the driving slot 40b. The swinging portion 50 is driven by the linkage portion 60 to move, such that the swinging portion 50 may swing relative to the body 10 of the robot.

FIG. 4 is a schematic view illustrating a swinging member according to an embodiment of the present disclosure. As shown in FIG. 4, the swinging portion 50 of the swinging member 70 at least includes a first part 51, a second part 52 and a third part 53. The first part 51 has a first end and a second end opposite to each other, and the first end of the first part 51 is movably connected to the body 10. The second part 52 has a first end and a second end opposite to each other. The first end of the second part 52 is connected to the second end of the first part 51, and the second part 52 is connected to the linkage portion 60. The third part 53 is connected to the second end of the second part 52.

In some embodiments of the present disclosure, the swinging portion 50 has a rod shape. The first part 51, the second part 52 and the third part 53 are connected in sequence. The first end of the first part 51 is movably connected to the body 10, and the linkage portion 60 is connected to the second part 52 located in the middle, so that the swinging portion 50 can be driven to swing smoothly and stably. The third part 53 is be connected to the movable part 20, or the third part 53 is configured as the movable part. For example, a decorative member is arranged on a surface of the third part 53 to form a shape, such as the tail and ears. The swinging portion 50 includes three parts that are connected in sequence, and by adjusting an included angle between any adjacent two of the three parts, it is possible to adjust a movement track of the third part 53, such that a movement track of the movable part 20 can satisfy a design requirement.

In some embodiments, a center line of the first part 51 and a center line of the second part 52 are coplanar and have a first preset included angle. That is, the first preset included angle is defined between the center line of the first part 51 and the center line of the second part 52. The first preset included angle is greater than 0° and less than 180°. For example, the first preset included angle may be 120°.

A center line of the third part 53 and the center line of the second part 52 are coplanar and have a second preset included angle. That is, the second preset included angle is defined between the center line of the third part 53 and the center line of the second part 52. The second preset included angle is greater than 0° and less than 180°. For example, the second preset included angle may be 120°.

The first preset included angle may be equal or unequal to the second preset included angle, and the specific values of the first preset included angle and the second preset included angle may be set according to specific needs, such that the movement track of the movable part 20 can satisfy the design requirement. It should be noted that the present disclosure does not limit the value ranges of the first preset included angle and the second preset included angle, and the above descriptions about the value ranges of the first preset angle and the second preset angle are only examples and not limitations.

In some embodiments, the swinging portion 50 may have elasticity. For example, the swinging portion 50 is a rubber rod, or the third part 53 of the swinging portion 50 is a rubber rod, such that the swinging portion 50 may also wag due to its own elasticity during the movement, which makes the robot more realistic.

When assembling the robot, the first part 51 and the second part 52 of the swinging portion 50, the transmission member 40 and the driving member 30 may be covered by other structures of the robot, such as a baffle, a shell or the like, such that only the third part 53 is exposed to be connect to the movable part 20, which makes the robot more realistic.

As shown in FIG. 4, the first end of the first part 51 of the swinging portion 50 includes a hinge section 511.

The first end of the first part 51 of the swinging portion 50 to be hinged with the body of the robot has the hinge section 511, so that it is convenient to hinge the swinging portion 50 with the body 10 of the robot by the hinge section 511.

In some embodiments, the hinge section 511 may be a structure with a hinge function, such as a ball joint or a cup joint. By the hinge of the ball joint, the swinging portion 50 has a high freedom degree and a wide movement range, which is beneficial to increasing the movement range of the movable part 20.

As shown in FIG. 4, the linkage portion 60 of the swinging member 70 includes a connecting part 61 and a sliding part 62. The connecting part 61 has a first end and a second end opposite to each other, and the first end of the connecting part 61 is connected to the swinging portion 50. The sliding part 62 is connected to the second end of the connecting part 61 and is in the driving slot 40b.

The sliding part 62 is fitted with the driving slot 40b. When the transmission member 40 moves, the sliding part 62 slides along the driving slot 40b, thus driving the swinging portion 50 to move through the connecting part 61.

In some embodiments of the present disclosure, the connecting part 61 may have a rod shape or a plate shape, and the sliding part 62 may be a ball joint or a roller. The first end of the connecting part 61 is connected to the swinging portion 50, and the second end of the connecting part 61 is connected to the ball joint. The ball joint has a small movement resistance in the driving slot 40b, which may widen the movement range of the swinging member 70.

As shown in FIG. 3, in some embodiments of the present disclosure, the transmission member 40 is a cam, and the driving slot 40b is in and around an outer peripheral wall 40a of the cam.

In some embodiments of the present disclosure, the driving mechanism includes the driving member 30, the cam and the swinging member 70. The swinging member 70 includes the swinging portion 50 and the linkage portion 60. The driving member 30 is connected to the body 10 of the robot. The driving member 30 may be a motor, and the output end of the driving member 30, i.e., a rotating shaft of the motor, is connected to the cam, and a rotation axis m of the cam is coaxial with the rotating shaft of the motor.

The linkage portion 60 is connected to a middle of the swinging portion 50, and the sliding part 62 of the linkage portion 60 is located in the driving slot 40b. The sliding part 62 moves along the driving slot 40b during rotation of the cam, and drives the swinging portion 50 to swing.

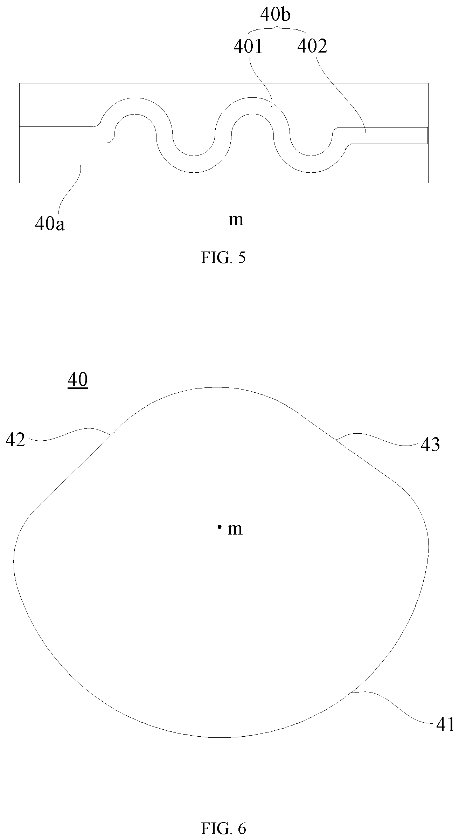

FIG. 5 is a developed schematic view of an outer peripheral wall of a cam according to an embodiment of the present disclosure. As shown in FIG. 5, the driving slot 40b includes a first segment 401.

In some embodiments, on a development surface of the outer peripheral wall 40a, a third preset included angle is defined between an extension direction of at least a part of the first segment 401 and the rotation axis m of the transmission member 40.

The outer peripheral wall 40a of the cam has a cylindrical surface. The development surface of the outer peripheral wall 40a refers to a plane obtained by cutting the outer peripheral wall 40a along a generatrix of the outer peripheral wall 40a, and then developing the cut outer peripheral wall 40a.

During the rotation of the cam, the movement of the linkage portion 60 is affected by two factors, namely a shape of the cam and a shape of the driving slot 40b.

The shape of the cam refers to an undulation of the outer peripheral wall 40a of the cam, i.e., a change of a distance from the outer peripheral wall 40a of the cam to the rotational axis m of the cam.

The undulation of the outer peripheral wall 40a of the cam influences a distance between the linkage portion 60 and the rotational axis m of the cam, such that the linkage portion 60 moves in a radial direction of the cam. The radial direction of the cam refers to a direction perpendicular to the rotation axis m of the cam and oriented from the rotation axis m of the cam to outside of the cam, or oriented from the outside of the cam to the rotation axis m of the cam.

Since the extension direction of the at least part of the first segment 401 and the rotation axis m of the transmission member 40 have the third preset included angle, when a value of the third preset included angle is adjusted so that the third preset included angle is not equal to 90°, the linkage portion 60 will be pushed by a side wall of the driving slot 40b while moving in the first segment 401, such that the linkage portion 60 has a movement component parallel to the rotation axis m of the cam. Therefore, by configuring the first segment 401 and setting an appropriate third preset included angle, the linkage portion 60 may move not only in the radial direction of the cam, but also in an axial direction of the cam, i.e., in a direction parallel to the rotation axis m of the cam.

By changing the shape of the cam and the shape of the first segment 401, a movement track of the linkage portion 60 may be changed, thus changing a movement rule of the swinging portion 50, such that the movable part 20, such as the tail, can move in a required manner.

While the movable part 20 is driven to move, by changing a rotation direction and/or a rotation speed of the driving member 30, the movement of the movable part 20 may also be adjusted, such that the movement of the movable part 20 meets the design requirement well.

In some embodiments, on the development surface of the outer peripheral wall 40a of the cam, the first segment 401 is has a curve shape, and the movement track of the linkage portion 60 in the driving slot 40b is complicated, such that the movable part 20 of the robot may generate a complicated movement track.

In some embodiments, the first segment 401 has a sinusoidal shape on the development surface of the outer peripheral wall 40a. That is, the first segment 401 is curved in the sinusoidal shape.

Since the first segment 401 has the sinusoidal shape, the movement of the linkage portion 60 is relatively stable, especially in the direction parallel to the rotation axis m of the cam. When the movement direction of the linkage portion 60 changes, the speed change is gentle, such that the movement of the movable part 20 is smooth and natural.

As shown in FIG. 5, the driving slot 40b includes a second segment 402. A fourth preset included angle is defined between an extension direction of the second segment 402 and the rotation axis m of the transmission member 40 on the development surface of the outer peripheral wall 40a, and the fourth preset included angle is not 0°.

On the development surface of the outer peripheral wall 40a, the second segment 402 extends in a straight line. During the rotation of the cam, the movements of the linkage portion 60 in two orthogonal directions along the second segment 402, i.e., the movement in the direction parallel to the rotation axis m of the transmission member 40 and the movement in the direction perpendicular to the rotation axis m of the transmission member 40, are related to the fourth preset included angle. In a case that the fourth preset included angle is 90°, that is, the second segment 402 is perpendicular to the rotation axis m, when the linkage portion 60 is in the second segment 402 during the rotation of the cam, the linkage portion 60 does not have a displacement in the direction parallel to the rotation axis m of the cam. At this time, the movement of the linkage portion 60 is only influenced by the undulation of the outer peripheral wall of the cam, and the linkage portion 60 moves in the radial direction of the cam. Thus, the swinging portion 50 may drive the movable part 20 to move in different ways, enriching the movement ways of the movable part 20.

It should be noted that the driving slot may be configured to define the movement track of the swinging member, that is, the movement track of the swinging member may be adjusted by adjusting the shape of the driving slot according to actual requirements. It can be understood that the first segment 401 and the second segment 402 of the driving slot may be jointed according to a preset rule so as to adjust the movement track of the swinging member. For example, the first segment 401 and the second segment 402 are sequentially jointed into an array.

In some embodiments, the driving slot 40b may include the first segment 401 and the second segment 402. An end of the second segment 402 is connected to an end of the first segment 401. On the development surface of the outer peripheral wall 40a, the second segment 402 is in a straight line and perpendicular to the rotation axis m of the cam, such that the swinging member 70 may have a complex movement.

In some embodiments of the present disclosure, the driving slot 40b is an annular slot, that is, both ends of the driving slot 40b are connected. In this way, the driving member 30 may drive the cam to rotate continuously over 360° in a fixed direction, and the linkage portion 60 periodically moves under an action of the annular driving slot 40b along with the rotation of the cam, so as to drive the movable part 20 to move periodically by the swinging portion 50.

In some other embodiments, the two ends of the driving slot 40b may not be connected. When the driving member 30 drives the cam to rotate till the linkage portion 60 moves to the end of the driving slot 40b, the driving member 30 changes the rotation direction and drives the cam to continue to rotate. The driving member 30 drives the cam to reciprocate, such that the linkage portion 60 reciprocates in the driving slot 40b, thus driving the movable part 20 to periodically move by the swinging portion 50.

FIG. 6 is a schematic view illustrating a cam according to an embodiment of the present disclosure. As shown in FIG. 6, on a plane perpendicular to the rotation shaft of the driving member 30, i.e., on a plane perpendicular to the rotation axis m of the cam, an orthographic projection of the cam has an abnormal shape. An outer contour of the transmission member 40 includes a first side edge 41, a second side edge 42 and a third side edge 43. Each of the first side edge 41, the second side edge 42 and the third side edge 43 includes a first end and a second end. The first end of the second side edge 42 is transitionally connected to the first end of the first side edge 41, the second end of the second side edge 42 is transitionally connected to the first end of the third side edge 43, and the second end of the third side edge 43 is connected to the second end the first side edge 41. The first side edge 41 is a circular arc edge, and a circle center of the first side edge 41 is located on the rotational axis m of the transmission member 40.

Since the circle center of the first side edge 41 is located on the rotation axis m of the cam, the undulation of the outer peripheral wall 40a of the cam is 0 on the first side edge 41. During the rotation of the cam, when the linkage portion 60 is located on the first side edge 41, a distance from the linkage portion 60 to the rotation axis m of the cam remains unchanged, and a displacement of the linkage portion 60 in the radial direction of the cam is 0, such that the movement of the linkage portion 60 is only influenced by the shape of the driving slot 40b, which facilitates to design the shape of the driving slot 40b and to control the movement track of the linkage portion 60, thus allowing the movement of the movable part 20 to meet the design requirement.

A length of the second side edge 42 may be equal to a length of the third side edge 43, such that the orthographic projection of the cam has a symmetrical shape on the plane perpendicular to the rotation shaft of the driving member 30.

In some embodiments of the present disclosure, the second segment 402 of the driving slot 40b is located on the second side edge 42 and the third side edge 43, and the first segment 401 of the driving slot 40b is located on the first side edge 41.

The second side edge 42 and the third side edge 43 are each transitionally connected to the first side edge 41 by an arc, and the second side edge 42 is transitionally connected to the third side edge 43 by an arc, which facilitates the arrangement of the driving slot 40b, such that the driving slot 40b has a smooth transition, and the movement of the linkage portion 60 is smooth and stable.

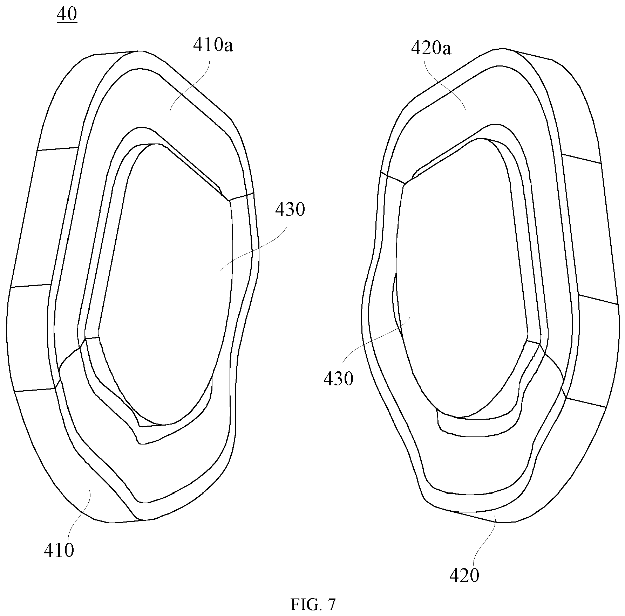

FIG. 7 is a schematic view illustrating a cam according to an embodiment of the present disclosure. As shown in FIG. 7, the transmission member 40 includes a first transmission portion 410 and a second transmission portion 420, and the first transmission portion 410 is opposite to and connected to the second transmission portion 420 to define the driving slot 40b.

Since the transmission member 40 is divided into two parts and the two parts are connected to form the driving slot 40b, it is convenient to mount the sliding part 62 in the driving slot 40b.

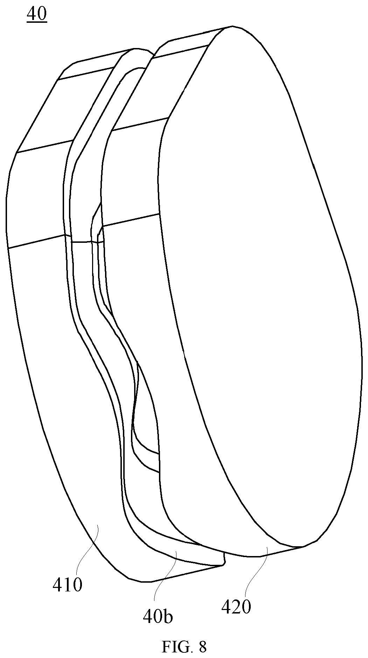

As shown in FIG. 7, the first transmission portion 410 has a first guide groove 410a in its surface, the second transmission portion 420 has a second guide groove 420a in its surface, and the first guide groove 410a is opposite to the second guide groove 420a. FIG. 8 is a schematic view illustrating the first transmission portion and the second transmission portion connected with each other according to an embodiment of the present disclosure. As shown in FIG. 8, the first transmission portion 410 and the second transmission portion 420 are arranged opposite to and connected with each other, and the first guide groove 410a and the second guide groove 420a define the driving slot 40b. The openings of the first guide groove 410a and the second guide groove 420a are opposite to and spaced apart from each other to define the driving slot 40b. In some embodiments, the first guide groove 410a and the second guide groove 420a may have the same shape, so that the first guide groove 410a and the second guide groove 420a can be well fitted with each other to define the driving slot 40b.

Since the first guide groove 410a is formed in the surface of the first transmission portion 410 and the second guide groove 420a is formed in the surface of the second transmission portion 420, the first guide groove 410a and the second guide groove 420a respectively restrict the linkage portion 60 from both sides of the linkage portion 60, such that the movement of the linkage portion 60 is restricted in extension directions of the first guide groove 410a and the second guide groove 420a. In the embodiments where the first guide groove 410a and the second guide groove 420a have the same shape, the first guide groove 410a and the second guide groove 420a have the same extension direction, so that the driving slot 40b can be formed conveniently and easily. During the movement of the linkage portion 60 along the driving slot 40b, a groove bottom of the first guide groove 410a and a groove bottom of the second guide groove 420a push the linkage portion 60 by exerting a force on the linkage portion 60, such that the linkage portion 60 may move in the direction parallel to the rotational axis m of the cam.

As shown in FIG. 7, both a middle part of the surface of the first transmission portion 410 where the first guide groove 410a is and a middle part of the surface of the second transmission portion 420 where the second guide groove 420a is have a boss 430. The first guide groove 410a may extent along an edge of the first transmission portion 410, and the second guide groove 420a may extend along an edge of the second transmission portion 420. Both the first guide groove 410a and the second guide groove 420a surround the respective boss 430. The boss 430 of the first transmission portion 410 is connected to the boss 430 of the second transmission portion 420.

Since the first transmission portion 410 and the second transmission portion 420 have the boss 430 respectively, and their bosses 430 are connected, the first guide groove 410a and the second guide groove 420a are spaced apart by a certain distance to form the driving slot 40b.

In some embodiments, the first transmission portion 410 is detachably connected to the second transmission portion 420, for example, through a screw or by bonding. In some other embodiments, the first transmission portion 410 and the second transmission portion 420 may also be an integral structure, for example, being integrated by injection molding.

The sliding part 62 is located in the first guide groove 410a and the second guide groove 420a, and is fitted with the first guide groove 410a and the second guide groove 420a. When the cam rotates, the sliding part 62 moves in the first guide groove 410a and the second guide groove 420a. When the sliding part 62 moves to the first segment 401 of the driving slot 40b, an inner wall (for example, a bottom wall) of the first guide groove 410a or an inner wall (for example, a bottom wall) of the second guide groove 420a exerts a push force on the sliding part 62, so as to push the sliding part 62 to move in the direction parallel to the rotational axis m of the cam.

Both the inner wall of the first guide groove 410a and the inner wall of the second guide groove 420a may have an arc-shaped concave surface to be fitted with a surface of the sliding part 62, such that the sliding part 62 moves smoothly and stably in the driving slot 40b.

The first transmission portion 410 and the second transmission portion 420 may be made of self-lubricating materials to reduce the resistance on the linkage portion 60 when the linkage portion 60 moves in the driving slot 40b, thus allowing the movement of the linkage portion 60 to be stable, and reducing the abrasion of the cam and the sliding part 62.

The robot according to the embodiments of the present disclosure includes the body 10 and the driving mechanism as shown in FIG. 2 to FIG. 8. The driving member 30 of the driving mechanism is connected to the body 10, and one end of the swinging member 70 is movably connected with the body 10.

In the embodiments, the robot also includes the movable part 20, and the movable part 20 is connected to the other end of the swinging member 70. In some other embodiments, the other end of the swinging member 70 may also be directly configured as the movable part 20, such as the tail, the ears or the like of the robot.

When arranging the movable part 20, the movable part 20 may be connected to the third part 53 of the swinging portion 50, either sleeved outside the swinging portion 50 or connected to the end of the swinging portion 50, which may be configured according to a specific structure of the robot.

In some embodiments of the present disclosure, the transmission member 40 has the driving slot 40b, and a part of the swinging member 70 is movably connected in the driving slot 40b. When the driving member 30 drives the transmission member 40 to move, the part of the swinging member 70 movably connected in the driving slot 40b moves along the driving slot 40b to drive the swinging member 70 to swing, as the swinging member 70 is fitted with the driving slot 40b. By connecting the movable part 20 to the swinging member 70, or directly configuring the part of the swinging member 70 as the movable part 20, the movable part 20 of the robot may be driven to move. The driving mechanism has a simple structure and a small volume, thus saving space and reducing a cost, which is beneficial to reducing a production cost of the robot.

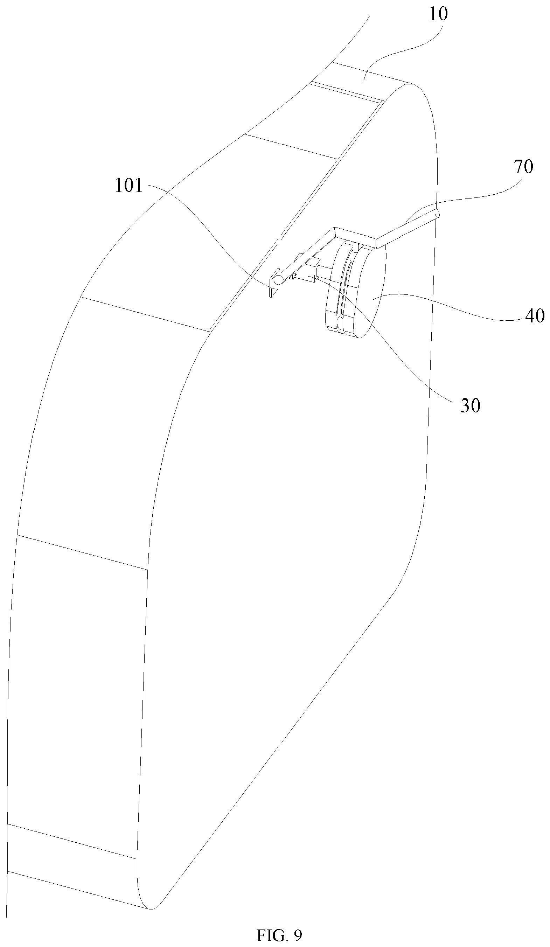

FIG. 9 is a partial schematic view of a robot according to an embodiment of the present disclosure. As shown in FIG. 9, a hinged support 101 is connected to an outer wall of the body 10, and the swinging member 70 is connected to the hinged support 101.

By arranging the hinged support 101 outside the body 10, the hinged support 101 may be hinged with the hinge section 511 of the swinging member 70, such that the swinging member 70 has a high freedom degree and a wide movement range.

## Claims

1. A driving mechanism for a robot, comprising:
a driving member (30) having an output end;
a transmission member (40) connected to the output end of the driving member, wherein the transmission member (40) has a driving slot (40b), and the driving slot (40b) extends along a circumferential direction of the transmission member (40); and
a swinging member (70) configured to be movably connected to a body (10) of the robot, wherein a part of the swinging member (70) is movably connected in the driving slot (40b), and configured to move along the driving slot (40b) under drive of the transmission member (40) to drive the swinging member (70) to swing,
wherein the swinging member (70) comprises:
a swinging portion (50) configured to be connected to the body (10); and
a linkage portion (60) having a first end and a second end opposite to each other, wherein the first end of the linkage portion (60) is connected to the swinging portion (50),
wherein the swinging portion (50) comprises:
a first part (51) having a first end and a second end opposite to each other, wherein the first end of the first part (51) is configured to be movably connected to the body (10);
a second part (52) having a first end and a second end opposite to each other, wherein the first end of the second part (52) is connected to the second end of the first part (51); and
a third part (53) connected to the second end of the second part (52),
wherein the second end of the linkage portion (60) is in the driving slot (40b), and the second part (52) is connected to the linkage portion (60), wherein,
the transmission member (40) is a cam, the driving slot (40b) is in and around an outer peripheral wall (40a) of the cam, and the outer peripheral wall (40a) of the cam has a cylindrical surface,
the driving slot (40b) comprises a first segment (401), and the first segment (401) has a sinusoidal shape on a development surface of the outer peripheral wall (40a), wherein the development surface of the outer peripheral wall (40a) refers to a plane obtained by cutting the outer peripheral wall (40a) along a generatrix of the outer peripheral wall (40a), and then developing the cut outer peripheral wall (40a).

2. The driving mechanism according to claim 1, wherein a center line of the first part (51) and a center line of the second part (52) are coplanar and a first preset included angle is defined between the center line of the first part (51) and the center line of the second part (52); and/or
a center line of the third part (53) and a center line of the second part (52) are coplanar and a second preset included angle is defined between the center line of the third part (53) and the center line of the second part (52).

3. The driving mechanism according to claim 1 or 2, wherein the first end of the first part (51) comprises a hinge section (511).

4. The drive mechanism according to any one of claims 1 to 3, wherein the linkage portion (60) comprises:
a connecting part (61) having a first end and a second end opposite to each other, wherein the first end of the connecting part (61) is connected to the swinging portion (50); and
a sliding part (62) connected to the second end of the connecting part (61) and in the driving slot (40b).

5. The driving mechanism according to claim 1, wherein the transmission member (40) comprises a first transmission portion (410) and a second transmission portion (420) opposite to each other, and the first transmission portion (410) is connected to the second transmission portion (420) to define the driving slot (40b).

6. The driving mechanism according to claim 5, wherein the first transmission portion (410) has a first guide groove (410a), the second transmission portion (420) has a second guide groove (420a), and the first guide groove (410a) and the second guide groove (420a) define the driving slot (40b).

7. The driving mechanism according to any one of claims 1 to 6, wherein the driving slot (40b) further comprises a second segment (402),
a third preset included angle is defined between an extension direction of at least a part of the first segment (401) and a rotation axis (m) of the transmission member (40) on a development surface of the outer peripheral wall (40a); and
a fourth preset included angle is defined between an extension direction of the second segment (402) and a rotation axis (m) of the transmission member (40) on a development surface of the outer peripheral wall (40a).

8. The driving mechanism according to any one of claims 1 to 7, wherein on a plane perpendicular to a rotation axis (m) of the transmission member (40), an outer contour of the transmission member (40) comprises a first side edge (41), a second side edge (42) and a third side edge (43), and each of the first side edge (41), the second side edge (42) and the third side edge (43) comprises a respective first end and a respective second end;
the first end of the second side edge (42) is transitionally connected to the first end of the first side edge (41), the second end of the second side edge (42) is transitionally connected to the first end of the third side edge (43), and the second end of the third side edge (43) is connected to the second end the first side edge (41);
the first side edge (41) is a circular arc edge, and a circle center of the first side edge (41) is on the rotation axis (m) of the transmission member (40).

9. A robot, comprising a body (10) and a driving mechanism according to any one of claims 1 to 8,
wherein the driving member (30) of the driving mechanism is connected to the body (10), and the swinging member (70) is movably connected to the body (10).

10. The robot according to claim 9, wherein a hinged support (101) is connected to an outer wall of the body (10), and the swinging member (70) is connected to the hinged support (101).

## Patentansprüche

1. Antriebsmechanismus für einen Roboter, der aufweist:
ein Antriebselement (30) mit einem Ausgangsende;
ein Übertragungselement (40), das mit dem Ausgangsende des Antriebselements verbunden ist, wobei das Übertragungselement (40) einen Antriebspalt (40b) aufweist, und der Antriebspalt (40b) sich entlang einer Umfangsrichtung des Übertragungselements (40) erstreckt; und
ein Schwingelement (70), das so ausgebildet ist, dass es bewegbar mit einem Körper (10) des Roboters verbunden ist, wobei ein Teil des Schwingelements (70) bewegbar in dem Antriebspalt (40b) verbunden ist und so ausgebildet ist, dass es sich unter dem Antrieb des Übertragungselements (40) entlang des Antriebspalts (40b) bewegt, um das Schwingelement (70) zum Schwingen anzutreiben,
wobei das Schwingelement (70) aufweist:
einen Schwingabschnitt (50), der so ausgebildet ist, dass er mit dem Körper (10) verbunden werden kann; und
einen Gestängeabschnitt (60) mit einem ersten Ende und einem zweiten Ende, die entgegengesetzt zueinander sind, wobei das erste Ende des Gestängeabschnitts (60) mit dem Schwingabschnitt (50) verbunden ist,
wobei der Schwingabschnitt (50) aufweist:
ein erstes Teil (51) mit einem ersten Ende und einem zweiten Ende, die entgegengesetzt zueinander sind, wobei das erste Ende des ersten Teils (51) so ausgebildet ist, dass es bewegbar mit dem Körper (10) verbunden ist;
ein zweites Teil (52) mit einem ersten Ende und einem zweiten Ende, die entgegengesetzt zueinander sind, wobei das erste Ende des zweiten Teils (52) mit dem zweiten Ende des ersten Teils (51) verbunden ist; und
ein drittes Teil (53), das mit dem zweiten Ende des zweiten Teils (52) verbunden ist, wobei sich das zweite Ende des Gestängeabschnitts (60) in dem Antriebspalt (40b) befindet und das zweite Teil (52) mit dem Gestängeabschnitt (60) verbunden ist, wobei
das Übertragungselement (40) ein Nocken ist, der Antriebspalt (40b) sich in einer und um eine Außenumfangswand (40a) des Nockens befindet und die Außenumfangswand (40a) des Nockens eine zylindrische Oberfläche aufweist,
wobei der Antriebspalt (40b) ein erstes Segment (401) aufweist, und das erste Segment (401) eine sinusförmige Form auf einer Entwicklungsfläche der Außenumfangswand (40a) hat, wobei sich die Entwicklungsfläche der Außenumfangswand (40a) auf eine Ebene bezieht, die durch Schneiden der Außenumfangswand (40a) entlang einer Generatrix der Außenumfangswand (40a) und anschließendes Entwickeln der geschnittenen Außenumfangswand (40a) erhalten wird.

2. Antriebsmechanismus nach Anspruch 1, wobei eine Mittellinie des ersten Teils (51) und eine Mittellinie des zweiten Teils (52) komplanar sind und ein erster voreingestellter eingeschlossener Winkel zwischen der Mittellinie des ersten Teils (51) und der Mittellinie des zweiten Teils (52) definiert ist; und/oder
eine Mittellinie des dritten Teils (53) und eine Mittellinie des zweiten Teils (52) komplanar sind und ein zweiter voreingestellter eingeschlossener Winkel zwischen der Mittellinie des dritten Teils (53) und der Mittellinie des zweiten Teils (52) definiert ist.

3. Antriebsmechanismus nach Anspruch 1 oder 2, wobei das erste Ende des ersten Teils (51) einen Gelenkabschnitt (511) aufweist.

4. Antriebsmechanismus nach einem der Ansprüche 1 bis 3, wobei der Gestängeabschnitt (60) aufweist:
ein Verbindungsteil (61) mit einem ersten Ende und einem zweiten Ende, die entgegengesetzt zueinander sind, wobei das erste Ende des Verbindungsteils (61) mit dem Schwingabschnitt (50) verbunden ist; und
ein Gleitteil (62), das mit dem zweiten Ende des Verbindungsteils (61) verbunden ist und sich in dem Antriebsspalt (40b) befindet.

5. Antriebsmechanismus nach Anspruch 1, wobei das Übertragungselement (40) einen ersten Übertragungsabschnitt (410) und einen zweiten Übertragungsabschnitt (420) aufweist, die entgegengesetzt zueinander sind, und der erste Übertragungsabschnitt (410) mit dem zweiten Übertragungsabschnitt (420) verbunden ist, um den Antriebsspalt (40b) zu definieren.

6. Antriebsmechanismus nach Anspruch 5, wobei der erste Übertragungsabschnitt (410) eine erste Führungsnut (410a) aufweist, der zweite Übertragungsabschnitt (420) eine zweite Führungsnut (420a) aufweist, und die erste Führungsnut (410a) und die zweite Führungsnut (420a) den Antriebsspalt (40b) definieren.

7. Antriebsmechanismus nach einem der Ansprüche 1 bis 6, wobei der Antriebsspalt (40b) ferner ein zweites Segment (402) aufweist,
ein dritter voreingestellter eingeschlossener Winkel zwischen einer Erstreckungsrichtung von mindestens einem Teil des ersten Segments (401) und einer Drehachse (m) des Übertragungselements (40) auf einer Entwicklungsfläche der Außenumfangswand (40a) definiert ist; und
ein vierter voreingestellter eingeschlossener Winkel zwischen einer Erstreckungsrichtung des zweiten Segments (402) und einer Drehachse (m) des Übertragungselements (40) auf einer Entwicklungsfläche der Außenumfangswand (40a) definiert ist.

8. Antriebsmechanismus nach einem der Ansprüche 1 bis 7, wobei in einer Ebene senkrecht zu einer Drehachse (m) des Übertragungselements (40) eine Außenkontur des Übertragungselements (40) eine erste Seitenkante (41), eine zweite Seitenkante (42) und eine dritte Seitenkante (43) aufweist und jede der ersten Seitenkante (41), der zweiten Seitenkante (42) und der dritten Seitenkante (43) ein jeweiliges erstes Ende und ein jeweiliges zweites Ende aufweist;
wobei das erste Ende der zweiten Seitenkante (42) übergangsweise mit dem ersten Ende der ersten Seitenkante (41) verbunden ist, das zweite Ende der zweiten Seitenkante (42) übergangsweise mit dem ersten Ende der dritten Seitenkante (43) verbunden ist, und das zweite Ende der dritten Seitenkante (43) mit dem zweiten Ende der ersten Seitenkante (41) verbunden ist;
wobei die erste Seitenkante (41) eine Kreisbogenkante ist und ein Kreismittelpunkt der ersten Seitenkante (41) auf der Drehachse (m) des Übertragungselements (40) liegt.

9. Roboter, der einen Körper (10) und einen Antriebsmechanismus nach einem der Ansprüche 1 bis 8 aufweist,
wobei das Antriebselement (30) des Antriebsmechanismus mit dem Körper (10) verbunden ist, und das Schwingelement (70) bewegbar mit dem Körper (10) verbunden ist.

10. Roboter nach Anspruch 9, wobei ein frei drehbares Auflager (101) mit einer Außenwand des Körpers (10) verbunden ist und das Schwingelement (70) mit dem frei drehbaren Auflager (101) verbunden ist.

## Revendications

1. Mécanisme d'entraînement d'un robot, comprenant :
un élément d'entraînement (30) comportant une extrémité de sortie ;
un élément de transmission (40) en prise avec l'extrémité de sortie de l'élément d'entraînement, dans lequel l'élément de transmission (40) comporte une fente d'entraînement (40b), et la fente d'entraînement (40b) s'étend dans une direction circonférentielle de l'élément de transmission (40) ; et
un élément oscillant (70) configuré pour être relié mobile à un corps (10) du robot, dans lequel une partie de l'élément oscillant (70) est en prise mobile dans la fente d'entraînement (40b), et configuré pour être mû le long de la fente d'entraînement (40b) sous l'entraînement de l'élément de transmission (40) pour entraîner l'élément oscillant (70) à osciller,
dans lequel l'élément oscillant (70) comprend :
une partie oscillante (50) configurée pour être reliée au corps (10) ; et
une partie biellette (60) comportant une première extrémité et une seconde extrémité opposées l'une à l'autre, dans lequel la première extrémité de la partie biellette (60) est reliée à la partie oscillante (50),
dans lequel la partie oscillante (50) comprend :
une première partie (51) comportant une première extrémité et une seconde extrémité opposées l'une à l'autre, dans lequel la première extrémité de la première partie (51) est configurée pour reliée mobile au corps (10) ;
une deuxième partie (52) comportant une première extrémité et une seconde extrémité opposées l'une à l'autre, dans lequel la première extrémité de la deuxième partie (52) est reliée à la seconde extrémité de la première partie (51) ; et
une troisième partie (53) reliée à la seconde extrémité de la deuxième partie (52),
dans lequel la seconde extrémité de la partie biellette (60) est située dans la fente d'entraînement (40b), et la deuxième partie (52) est reliée à la partie biellette (60), dans lequel,
l'élément de transmission (40) est une came, la fente d'entraînement (40b) est située dans et autour d'une paroi périphérique extérieure (40a) de la came, et la paroi périphérique extérieure (40a) de la came comporte une surface cylindrique,
la fente d'entraînement (40b) comprend un premier segment (401), et le premier segment (401) a une forme sinusoïdale sur une surface de développement de la paroi périphérique extérieure (40a), dans lequel la surface de développement de la paroi périphérique extérieure (40a) se réfère à un plan obtenu par une coupe de la paroi périphérique extérieure (40a) le long d'une génératrice de la paroi périphérique extérieure (40a), et ensuite par un développement de la paroi périphérique extérieure coupée (40a).

2. Mécanisme d'entraînement selon la revendication 1, dans lequel un axe longitudinal de la première partie (51) et un axe longitudinal de la deuxième partie (52) sont coplanaires et un premier angle inclus prédéfini est défini entre l'axe longitudinal de la première partie (51) et l'axe longitudinal de la deuxième partie (52) ; et/ou
un axe longitudinal de la troisième partie (53) et un axe longitudinal de la deuxième partie (52) sont coplanaires et un deuxième angle inclus prédéfini est défini entre l'axe longitudinal de la troisième partie (53) et l'axe longitudinal de la deuxième partie (52).

3. Mécanisme d'entraînement selon la revendication 1 ou la revendication 2, dans lequel la première extrémité de la première partie (51) comprend une section d'articulation (511).

4. Mécanisme d'entraînement selon l'une quelconque des revendications 1 à 3, dans lequel la partie biellette (60) comprend :
une partie de liaison (61) comportant une première extrémité et une seconde extrémité opposées l'une à l'autre, dans lequel la première extrémité de la partie de liaison (61) est reliée à la partie oscillante (50) ; et
une partie coulissante (62) reliée à la seconde extrémité de la partie de liaison (61) et située dans la fente d'entraînement (40b).

5. Mécanisme d'entraînement selon la revendication 1, dans lequel l'élément de transmission (40) comprend une première partie de transmission (410) et une seconde partie de transmission (420) opposées l'une à l'autre, et la première partie de transmission (410) est reliée à la seconde partie de transmission (420) pour définir la fente d'entraînement (40b).

6. Mécanisme d'entraînement selon la revendication 5, dans lequel la première partie de transmission (410) comporte une première rainure de guidage (410a), la seconde partie de transmission (420) comporte une seconde rainure de guidage (420a), et la première rainure de guidage (410a) et la seconde rainure de guidage (420a) délimitent la fente d'entraînement (40b).

7. Mécanisme d'entraînement selon l'une quelconque des revendications 1 à 6, dans lequel la fente d'entraînement (40b) comprend en outre un second segment (402),
un troisième angle inclus prédéfini est défini entre une direction d'étendue d'au moins une partie du premier segment (401) et un axe de rotation (m) de l'élément de transmission (40) sur une surface de développement de la paroi périphérique extérieure (40a) ; et
un quatrième angle inclus prédéfini est défini entre une direction d'étendue du second segment (402) et un axe de rotation (m) de l'élément de transmission (40) sur une surface de développement de la paroi périphérique extérieure (40a).

8. Mécanisme d'entraînement selon l'une quelconque des revendications 1 à 7, dans lequel, sur un plan perpendiculaire à un axe de rotation (m) de l'élément de transmission (40), un contour extérieur de l'élément de transmission (40) comprend un premier bord latéral (41), un deuxième bord latéral (42) et un troisième bord latéral (43), et chacun du premier bord latéral (41), du deuxième bord latéral (42) et du troisième bord latéral (43) comprend une première extrémité respective et une seconde extrémité respective ;
la première extrémité du deuxième bord latéral (42) est reliée de manière transitionnelle à la première extrémité du premier bord latéral (41), la seconde extrémité du deuxième bord latéral (42) est reliée de manière transitionnelle à la première extrémité du troisième bord latéral (43), et la seconde extrémité du troisième bord latéral (43) est reliée à la seconde extrémité du premier bord latéral (41) ;
le premier bord latéral (41) est un bord en arc de cercle, et un centre de cercle du premier bord latéral (41) est situé sur l'axe de rotation (m) de l'élément de transmission (40).

9. Robot, comprenant un corps (10) et un mécanisme d'entraînement selon l'une quelconque des revendications 1 à 8,
dans lequel l'élément d'entraînement (30) du mécanisme d'entraînement est relié au corps (10), et l'élément oscillant (70) est relié mobile au corps (10).

10. Robot selon la revendication 9, dans lequel un support articulé (101) est relié à une paroi extérieure du corps (10), et l'élément oscillant (70) est relié au support articulé (101).
